# EUROPEAN PATENT APPLICATION

(11) **EP 2 765 721 A1**
(43) Date of publication of application: **13.08.2014**
(21) Application number: 13154885.1
(22) Date of filing: 12.02.2013
(51) Int. Cl.: H04B 17/00, H04B 7/04

(54) **Monitoring system for distributed antenna system**

(71) Applicant: Koninklijke KPN N.V., 2516 CK The Hague (NL)
(72) Inventor: Van der Tempel, Jan, 4254 GH Sleeuwijk (NL)
(74) Representative: Wuyts, Koenraad Maria

(57) **Abstract**

The invention relates to a monitoring method and monitoring system configured for monitoring a distributed antenna system comprising a network connected to at least one radio transceiver configured for radio communication with a wireless radio network and one or more spatially separated antennas configured for connecting wireless communication terminals with the wireless radio network via the at least one radio transceiver. The monitoring system comprises a plurality of signal transmitters, a signal receiver and a monitoring entity. The plurality of signal transmitters is mounted within range of the plurality of the spatially separated antennas, each of the signal transmitters being configured for repeatedly transmitting a monitoring signal. The at least one signal receiver is configured for receiving the monitoring signals from the plurality of signal transmitters. The monitoring entity is configured for analyzing the received signals in order to detect malfunction of a part of the distributed antenna system associated with one or more of the plurality of signal transmitters.

## Description

### FIELD OF THE INVENTION

The invention relates to a distributed antenna system. More particularly, the invention relates to a system and method for monitoring operation of a distributed antenna system.

### BACKGROUND OF THE INVENTION

A Distributed Antenna System (DAS) is a network of antennas spatially separated from each other, but connected to at least one common source. In this way the DAS is able to provide radio coverage within a given area, e.g. within a building or within a particular area. DAS is used in scenarios where alternate technologies are infeasible due to terrain, zoning challenges for cell towers, infeasible cell tower placements, isolation from existing radio sources, building materials etc.

One particular example of a situation wherein a DAS has been proven useful is within (large) buildings. Often, radio coverage from an outside wireless network is inferior within parts of the building. This may be cumbersome, not only for regular users of services provided by the wireless network, but also for emergency workers. Emergency workers may find themselves in communicative isolation within the building which, of course, is highly undesirable.

Therefore, in buildings like public buildings (e.g. governmental buildings) airports and hospitals, regulations apply requiring guaranteed radio coverage within these buildings. The guaranteed radio coverage within a building often not only requires the installation of a DAS to enable radio coverage within the building, but in addition requires a monitoring system for monitoring the actual operation of the DAS. Some regulations require 99,9 % uptime of the DAS.

In the art, it is known to use a pilot tone generator generating a tone that is coupled into a passive coaxial cable DAS and that is coupled out at another location. Measurement of the pilot tone may indicate problems within the coaxial cable trajectory of the DAS. This method is disadvantageous, because it only allows for monitoring a particular part of the DAS and does not allow for monitoring operation of the antennas themselves since the pilot tone is measured only in the coaxial cable.

### SUMMARY OF THE INVENTION

There is a need in the art for an improved monitoring system for a distributed antenna system.

To that end, a monitoring system is disclosed that is configured for monitoring a distributed antenna system. Furthermore, a monitoring method is disclosed.

The distributed antenna system comprises a network connected to at least one radio transceiver configured for radio communication with a wireless radio network. The distributed antenna system furthermore comprises one or more spatially separated antennas configured for connecting wireless communication terminals (such as mobile telephones or portophones) with the wireless radio network via the at least one radio transceiver. The network may comprise a wired network, e.g. a (coaxial) cable network or a fibre network and may comprise passive and/or active components, including repeaters, amplifiers etc.

The monitoring system comprises at least one, but preferably a plurality of signal transmitters and at least one signal receiver. The monitoring system may further comprise a monitoring entity.

The plurality of signal transmitters are mounted, preferably at a fixed location and/or such that each signal transmitter is positioned with respect to the spatially separated antenna to guarantee optimal coupling of a monitoring signal from the signal transmitter to the antenna, within range of the antennas such that the monitoring signal is transmitted towards the antenna in an optimal fashion, e.g. by reducing free space loss. The monitoring signal is transmitted repeatedly, e.g. at periodic intervals.

The at least one signal receiver is configured for receiving the monitoring signals from one or more of the plurality of signal transmitters. The signal receiver is preferably connected at the other end of the distributed antenna system with respect the signal transmitters in order to enable monitoring of substantially the complete distributed antenna system.

A monitoring entity may be part of the monitoring system. The monitoring entity is configured for analyzing the received signals to detect malfunction of a part of the distributed antenna system associated with one or more of the plurality of signal transmitters. One example is to analyze the signal strength of the received monitoring signal. A variation in the strength of the monitoring signal, including the complete loss of the monitoring signal, may indicate malfunction of a part of the distributed antenna system. The variation may be related to an initial measurement of the signal strength of the monitoring signal performed when installing the monitoring system. A threshold may be set to avoid indication of malfunction for small, natural, variations in the strength of the monitoring signal.

By providing a signal transmitter, e.g. one signal transmitter for each antenna of the plurality of spatially separated antennas, repeatedly transmitting monitoring signals and receiving and, preferably, analyzing the monitoring signals, substantially continuous monitoring of the distributed antenna system is enabled. The monitoring system can be used to monitor the operational status of the distributed antenna system and to report malfunction substantially immediately. The monitoring system enables a party employing a distributed antenna system to comply with requirements relating to the operational status of the distribution antenna systems, such as emergency-related requirement.

In a preferred embodiment of the monitoring system and method, the signal transmitters are radio frequency identification (rfid) tags. The rfid tags transmit the monitoring signal. Rfid tags provide several advantages, including low costs, convenient mounting, limited size, moisture-resistancy, being able to operate in the relevant temperature zones etc.

Although the rfid tags may be passive rfid tags, preferably the rfid tags used as signal transmitters are active rfid tags. Active rfid tags are capable of transmitting the repeated monitoring signals without external activation. The monitoring signals from the signal transmitters should have sufficient strength to overcome transmission losses experienced from the distributed antenna system while travelling to the signal receiver. The monitoring signals transmitted by active rfid tags are sufficiently strong to arrive at the signal receiver at a sufficiently high level, e.g. the monitoring signals are above the noise floor.

Active rfid tags possess their own power sources (batteries). In an embodiment of the monitoring system, the active rfid tags convey information regarding the battery status. In doing so, the tag or battery can be replaced sufficiently early to avoid disruption of the monitoring system. It should be noted that the active rfid tags may be connected to a common power source. In one particular example, the rfid tags receive power supply from the distributed antenna system.

Rfid tags enable transmission of a tag specific identifier. The tag identifiers can be registered and linked to particular components and/or parts of the distributed antenna system. In an embodiment of the disclosed monitoring system and method, the identifiers are mapped to corresponding parts of the distributed antenna system. Variations in the receipt of a monitoring signal from a particular rfid tag may accordingly be used to easily locate the part of the distributed antenna system that causes problems.

In an embodiment of the disclosed monitoring system and method, a warning signal is transmitted to an outside system (e.g. a service desk) indicating malfunction of the distributed antenna system. In this manner, other parties can be informed of the malfunction and, for example, provide service to the distributed antenna system.

It is noted that the invention relates to all possible combinations of features recited in the claims. Thus, all features and advantages of the first aspect likewise apply to the second and third aspects, respectively.

### BRIEF DESCRIPTION OF THE DRAWINGS

Aspects of the invention will be explained in greater detail by reference to exemplary embodiments shown in the drawings, in which:
FIG. 1 is a schematic illustration of a building provided with a distributed antenna system according to the prior art;
FIG. 2 is a schematic illustration of a prior art distributed antenna system;
FIG. 3 is a schematic illustration of a monitoring system configured for monitoring a distributed antenna system according to a first embodiment of the invention;
FIG. 4 is a schematic illustration of a database and user interface for registration of tag identifiers and mapping of the tag identifiers to corresponding parts of the distributed antenna system;
FIG. 5 is a schematic illustration of a monitoring system configured for monitoring a distributed antenna system according to a second embodiment of the invention; and
FIG. 6 is a flow chart depicting steps of a monitoring method for monitoring operation of a distributed antenna system according to an embodiment of the invention.

### DETAILED DESCRIPTION OF THE DRAWINGS

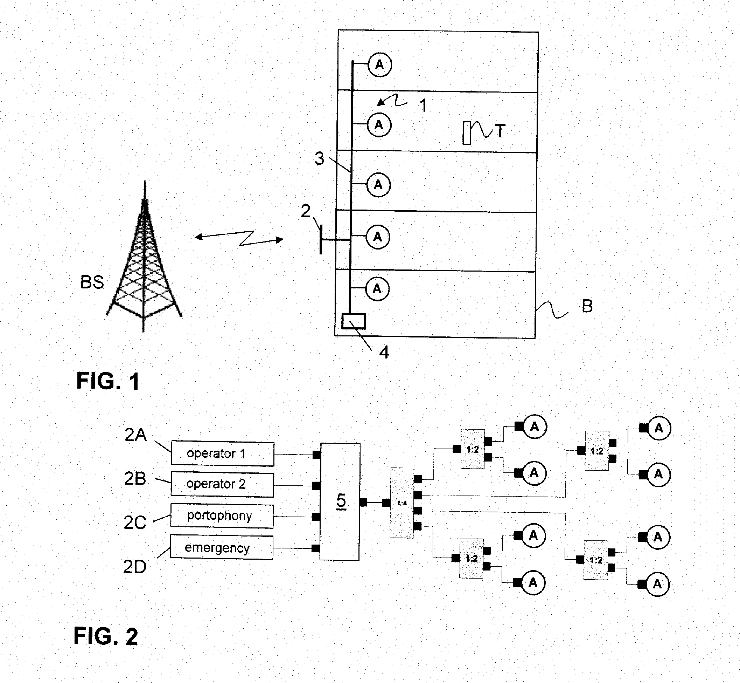

FIG. 1 is a schematic illustration of a building B provided with a distributed antenna system (DAS) 1 according to the prior art. DAS 1 comprises a broadband network connected to a radio transceiver 2 (e.g. a network antenna) comprising a network of coaxial cables 3 and a plurality of spatially separated antennas A. The antennas A are distributed over various floors of building B. It should be appreciated that more antennas may be provided per floor. Antennas A are normally positioned such that coverage is provided throughout the building B. DAS 1 may also comprise control logic 4. Other components, active and/or passive, may be part of the DAS 1, including but not limited to repeaters, splitters (see FIG. 2), amplifiers etc.

One or more wireless radio networks, schematically illustrated by a single radio tower BS, are provided outside building B offering a variety of services. Services include emergency services (e.g. C2000 (Tetra) in the Netherlands), telephony services (e.g. GSM, UMTS, LTE), private communication services (e.g. P-TETRA, PMR, PGSM, PLTE) and data communication services (e.g. 802.11a/b/g/n/ac, wimax, RFID). Radio signals from radio towers BS have difficulties penetrating the walls of the building B and/or reaching higher floors of the building B. Accordingly, services from the wireless radio network cannot be enjoyed everywhere and at all times within the building B.

In order to provide these services within building B at the appropriate quality, DAS 1 is employed. One or more network antennas 2 are configured to pick up the signal(s) from the wireless radio network(s). These signals are transferred over the coaxial cables 3 to the spatially separated antennas A such that the signal(s) can be received everywhere within the building by wireless communication terminals T. Reversely, signals from communication terminal T may be picked up by an antenna A and transferred to the wireless radio network outside building B via coaxial cables 3 and network antenna 2.

FIG. 2 is a schematic illustration of a DAS 1 according to the prior art. DAS 1 has a plurality of network antennas 2A-2D. Network antennas 2A and 2B transfer signals for different sources, e.g. telecommunication operators; network antenna 2C is intended for portophony and network antenna 2D for emergency services. The DAS 1 thus enables various services to be enjoyed within a building B. DAS 1 contains a matrix signal mix arrangement 5 to distribute the signals from the network antennas 2A-2D to each of the spatially distributed antennas A. In doing so, splitters are used as indicated in FIG. 2.

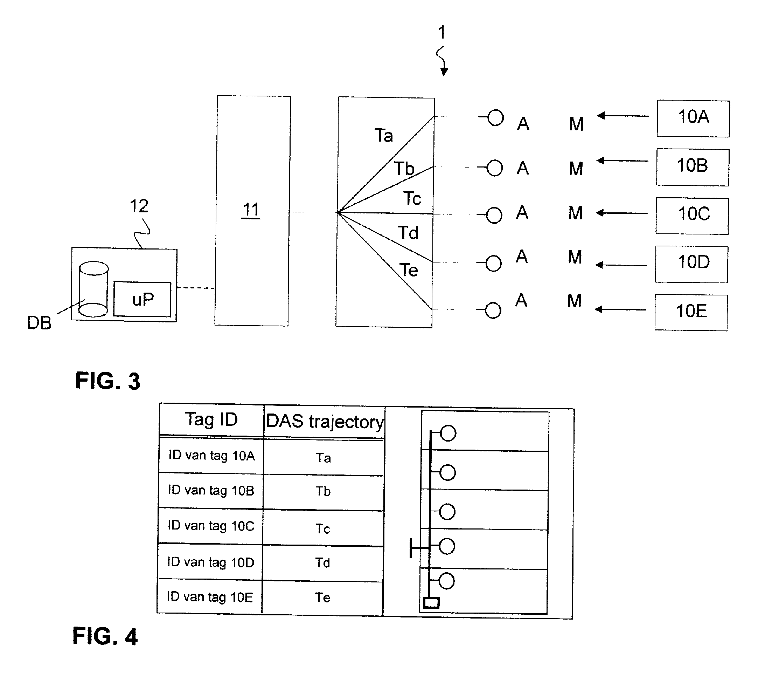

FIG. 3 is a schematic illustration of a monitoring system configured for monitoring a distributed antenna system DAS according to a first embodiment of the invention.

The monitoring system comprises a plurality of signal transmitters 10 for transmitting monitoring signals M in a repeated fashion. Although not necessary, in a preferable embodiment, a single signal transmitter 10A-10E is provided for each single antenna A in a one-to-one correspondence. The monitoring signals M may contain identification information of the signal transmitter, enabling identification of the source of the monitoring signal M for tracing the part of a trajectory Ti of the DAS 1 causing problems.

The monitoring system furthermore comprises a signal receiver 11 for receiving the respective monitoring signals M from the signal transmitters 10A-10E. It should be appreciated that the signal receiver 11 may be arranged such that operation of the radio transceiver 2 may also be monitored.

The monitoring system may further comprise a monitoring entity 12. Monitoring entity 12 may contain a database DB and a processor uP for analyzing the received monitoring signals M. Monitoring entity may contain further conventional hardware components (not shown) such as one or more types of memory, network cards etc. Monitoring entity 12 may be provided in direct cable connection with the signal receiver 11 or may be provided at a distance from the signal receiver 11 and the DAS 1.

Monitoring entity 12 may be as simple as detecting that monitoring signals M from one or more signal transmitters are no longer received indicating malfunction within one or more parts of the DAS 1. In a more advanced method, the system is calibrated in a fully operational condition and variations or deviations from the calibrated state are detected. For example, the signal strengths of the monitoring signals M may first be measured and initial signal strength values may be stored for each of the signal transmitters 10A-10E. Deviations from the initial values above a set threshold may subsequently indicate malfunction of the DAS 1.

In a preferred embodiment, the signal transmitters 10A-10E transmitting monitoring signals M comprise RFID tags.

In one embodiment, the RFID tags 10A-10E are passive RFID tags. Passive RFID tags provide for extremely cheap signal transmitters. Passive RFID tags only transmit monitoring signals M upon external stimulation. For example, a stimulation signal may be provided from the DAS 1, e.g. through the radiating antennas A of the DAS 1, and passive RFID tags 10A-10E may transmit monitoring signals M in response to the stimulation signal.

However, transmission losses over the air interface between the signal transmitters 10A-10E and within the DAS 1 favour the use of active RFID tags 10A-10E. Active RFID tags autonomously transmit monitoring signals M at greater signal strengths. The active RFID tags may e.g. transmit at a frequency below 1GHz, e.g. in a range of 1 MHz - 900 MHz, e.g. at 433.92 MHz. Antennas A should be configured to receive the monitoring signals M at the selected frequency, e.g. by selecting the bandwidth of the antenna to comprise the transmission frequency of the monitoring signal M. Antennas A may e.g. have a bandwidth of 380-6000 MHz or a smaller bandwidth 380-405 MHz. For the latter antenna A, 433 MHz monitoring signals M may still be detected to some extent.

In either case, the RFID tags 10A-10E transmit monitoring signals M containing unique identifiers of the RFID tag. The tag IDs may be stored in the database DB of the monitoring entity 12 along with information about the DAS trajectory that a particular. In addition, a user interface or alarm panel may be provided visualizing the part of the DAS 1 for which malfunction is detected. This is schematically illustrated in FIG. 4 for building B of FIG. 1.

In addition, for the embodiment with active RFID tags 10A-10E, information may be received of the battery status of the respective tags. Other information may also be transmitted, such as tamper detection information, motion information, temperature information, etc. This information may be contained in the monitoring signals M or may be provided separately.

In an example, each of the active RFID tags 10A-10E may transmit monitoring signals M at a signal strength TX of -5 dBm. Free space loss for transmission of monitoring signal M to the antenna is e.g. determined at 25 dB. Since the transmission trajectories Ti within the DAS 1 may be different for different trajectories Ti, the received signal strength of the monitoring signal M may be different at the RFID reader 11. The below table provides exemplary values:

| Tag ID | TX | - Trace loss over Ti | - Free space loss | = Reader RX |
|---|---|---|---|---|
| of tag 10A | -5 dBm | 12 dB | 25 dB | -42 dBm |
| of tag 10B | -5 dBm | 15 dB | 25 dB | -45 dBm |
| of tag 10C | -5 dBm | 20 dB | 25 dB | -50 dBm |
| of tag 10D | -5 dBm | 30 dB | 25 dB | -60 dBm |
| of tag 10E | -5 dBm | 40 dB | 25 dB | -70 dBm |

Assuming that the received signal strength values in the last column of the table are obtained for a fully operational DAS 1, deviations from these values may indicate malfunction of the corresponding trajectory Ti of the DAS 1.

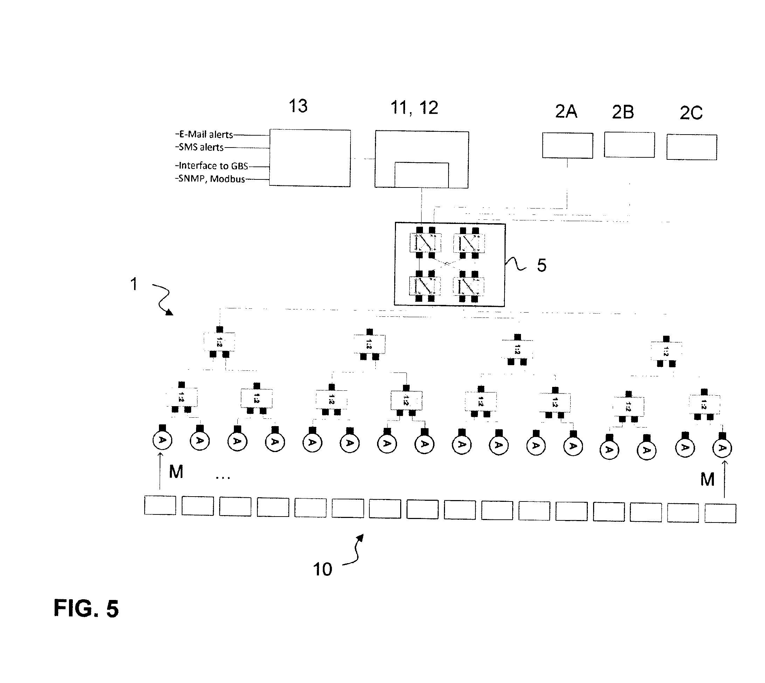

FIG. 5 is a schematic illustration of a monitoring system configured for monitoring a DAS 1 according to a second embodiment of the invention. Each of the spatially separated antennas A has a corresponding active RFID tag 10 transmitting a periodic monitoring signal M. DAS 1 contains several network antennas 2A-2C to provide multiple services via the DAS 1. Signals for the various services are distributed over all antennas A using mixing arrangement 5.

The monitoring system contains an RFID reader 11 combined with a database 12 containing all information about the RFID tags 10 and the current strength values of the monitoring signals M as indicated in the above table. Further information may include date, time and battery level. In addition, the monitoring system contains a DAS management system 13 providing (web-based) access and being configured for transmitting alerts, e.g. SMS- and/or e-mail alerts, to external systems.

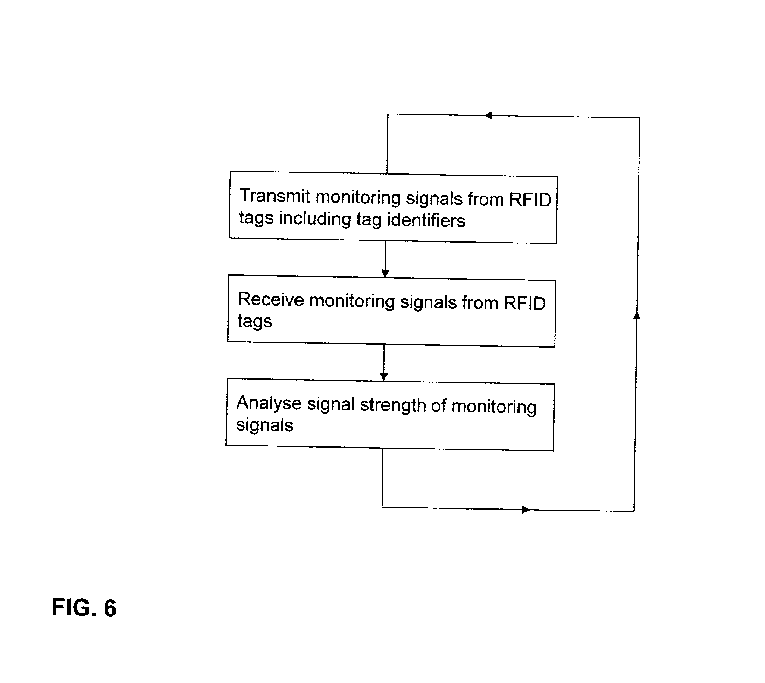

Finally, FIG. 6 is a flow chart depicting steps of a monitoring method for monitoring operation of a distributed antenna system according to an embodiment of the invention.

In a first step, monitoring signals M are transmitted from a plurality of mounted signal transmitters 10 to the corresponding spatially separated antennas A.

In a second step, the monitoring signals M are received from the plurality of spatially mounted signal transmitters 10 in the DAS 1.

In a third the signal strengths of the monitoring signals M are analysed to detect malfunction of a part of the DAS 1 associated with one or more of the plurality of signal transmitters 10.

## Claims

1. A monitoring system configured for monitoring a distributed antenna system, the distributed antenna system comprising:
a network connected to a radio transceiver for radio communication with a wireless radio network; and
a plurality of spatially separated antennas configured for connecting wireless communication terminals with the wireless radio network via the radio transceiver;
the monitoring system comprising:
- one or more signal transmitters mounted within range of the plurality of the spatially separated antennas, each of the signal transmitters being configured for repeatedly transmitting a monitoring signal;
- at least one signal receiver configured for receiving the monitoring signals from the one or more signal transmitters;
- a monitoring entity configured for analyzing the received monitoring signals in order to detect malfunction of a part of the distributed antenna system associated with the one or more signal transmitters.

2. The monitoring system according to claim 1, wherein the one or more signal transmitters comprise one or more radio frequency identification (rfid) tags and wherein the signal receiver comprises a radio frequency identification reader.

3. The monitoring system according to claim 2, wherein the radio frequency identification tags comprise active radio frequency identification tags.

4. The monitoring system according to claim 3, wherein the active radio frequency identification tags are further configured for reporting battery status of the tags.

5. The monitoring system according to claims 2, 3 or 4, wherein the monitoring signal comprises an identifier of the radio frequency identification tag.

6. The monitoring system according to claim 5, wherein the monitoring system is configured to map the identifier to a corresponding part of the distributed antenna system.

7. The monitoring system according to one or more of the preceding claims, wherein the monitoring system is configured to transmit a warning signal to an outside system indicating malfunction of the distributed antenna system.

8. A method for monitoring a distributed antenna system comprising a network connected to at least one radio transceiver configured for radio communication with a wireless radio network and a plurality of spatially separated antennas configured for connecting wireless communication terminals with the wireless radio network via the at least one radio transceiver, the method comprising:
- repeatedly transmitting monitoring signals from one or more mounted signal transmitters to the corresponding spatially separated antennas;
- receiving the signals from the plurality of spatially mounted signal transmitters in the distributed antenna system;
- analyzing the received signals to detect malfunction of a part of the distributed antenna system associated with the one or more signal transmitters.

9. The monitoring method according to claim 8, wherein the one or more signal transmitters comprise one or more radio frequency identification (rfid) tags for transmitting the monitoring signal and wherein the monitoring signal is received by a radio frequency identification reader.

10. The monitoring method according to claim 9, wherein the one or more radio frequency identification tags comprises active radio frequency identification tags.

11. The monitoring method according to claim 10, wherein the active radio frequency identification tags further report battery status of the tags.

12. The monitoring method according to claim 9, 10 or 11, wherein the monitoring signal comprises an identifier of the rfid tag.

13. The monitoring method according to claim 12, further comprising the step of mapping the identifier of the radio frequency identification tag to a corresponding part of the distributed antenna system.

14. The monitoring method according to one or more of the preceding claims 8-13, further comprising the step of transmitting a warning signal to an outside system indicating malfunction of the distributed antenna system.
